# EUROPEAN PATENT APPLICATION

(11) **EP 3 106 029 A1**
(43) Date of publication of application: **21.12.2016**
(21) Application number: 16169342.9
(22) Date of filing: 12.05.2016
(51) Int. Cl.: A01K 73/045

(54) **A TRAWL DOOR FOR USE IN TRAWL FISHING AND ITS USE**

(30) Priority: 12.05.2015 NL 2014794
(71) Applicant: H. F. K. Holding B.V., 3741 LM Baarn (NL)
(72) Inventor: KLEIN WOOLTHUIS, Harmen, 3741 LM Baarn (NL)
(74) Representative: Plaggenborg, Menko Bernard

(57) **Abstract**

The invention relates to a trawl door (1) for use with trawl fishing for keeping open above a water bottom a trawl net, wherein said trawl door is embodied for displacement above the water bottom in a displacement direction, wherein the trawl door has a first surface (7, 8) at a, with respect to the displacement direction, front side and a second surface (9, 10) at a, with respect to the displacement direction, back side, and wherein the trawl door at a front side has a pull device (11) for coupling a pull cord of the trawl net and at a back side has at least one forerunner device (12) for coupling thereto a forerunner. The trawl door is characterized in that it has a feeler device (5) that extends away from the trawl door for guiding same along the water bottom, said feeler device comprising a sliding shoe (6) with a sliding side for contact with the water bottom for guiding the trawl door above the water bottom. Preferably, over at least a portion of a side edge extending between a bottom side and a top side of the trawl door a controllable flap (13) is provided for adjusting the surface shape of the surface of the trawl door, preferably of the concavity and convexity of the surface of the trawl door, said flap preferably being operated by said feeler device.

The invention also relates to the use of the trawl door.

## Description

The present invention relates to a trawl door according to the preamble of claim 1. The invention also relates to the use of such trawl door.

Such trawl door, shortly identified as door, is generally known in the art. A well known trawl door has a flat shape wherein at one side a pull cord is connected for connection with a ship and at another side a fore runner for connection with a trawl net is provided. Two trawl doors are pulled by the ship by means of the pull cords above a water bottom, for example a seabed, such that they move away from each other to the left and right rear side of the ship. The maximum deflection of the trawl doors is determined, among others, by the length of the pull cords, the length of the fore runners, the width of the opening (mouth) of the trawl net, also mentioned fishnet, the position of the trawl doors with respect to the displacement direction (or: direction of movement), and the displacement velocity through the water. The mouth of the trawl net that is pulled behind the trawl doors is held open by the trawl doors situated at a distance from each other.

In the present invention, the term that the trawl door is coupled or connected to the pull cord means that the trawl door can be moved forward both by the pull cord and by a fishing cord. In a corresponding manner, the term that the trawl door is connected to a fore runner means that the trawl door is coupled to a fore runner as well as that the trawl door is coupled directly to the net. In the art it is most common to use a fore runner and as a consequence in the present description of the invention the situation wherein a fore runner is used, is applied as a standard situation even though the invention is not limited to the use of a fore runner.

During use, the trawl door will be moved through the water, at a short distance from a water bottom and in a so-called displacement direction. The terms "front side" or "inflow-side" and "forward" relate to the direction or the side to which the trawl door is displaced, whereas the terms "rear" or "backward" indicate the direction or side where the trawl door comes from. The terms "bottom", "down" and the like refer to the side of the trawl door that is directed towards the water bottom, while the terms "top" or "upwards" relate to the side direction or facing away from the water bottom. A trawl door generally has a substantially rectangular shape, with a lower edge, an upper edge and two side edges connecting these two edges. During use, these side edges will be set substantially vertically. Usually, at least two trawl doors will be used, a trawl door at a left front side and a trawl door at a right front side of the trawl net. The trawl doors are positioned slightly oblique in the water, wherein the front edges of the trawl doors are directed slightly down wards. Due to the pulling forces, since the pull cords are connected to the ship, the trawl doors have a tendency to move outwardly. This outward directed movement is limited by the variables mentioned above.

The rigid trawl door, that is the most commonly used trawl door, is disadvantageously in that no controlled adaptation of the position of the trawl door with respect to the bottom is possible. The presently used rigid doors will be deflected when colliding objects on the water bottom, however, this is deflection is disorderly. In addition to that, trawl doors are available shortly that allow a controlled adaptation of the trawl door's position. As a matter of fact, the control can only be made by means of a transmitter/receiver combination or by means of sensors that are provided on the trawl door. To that end, an electrical connection must be provided or the trawl doors must be provided with a battery.

In the art an automatic adaptation of the position of the trawl doors with respect to the water bottom without electrical parts is not available.

The present invention aims to provide an improved trawl door of the kind mentioned in the preamble.

The invention also relates to a trawl door mentioned in the preamble that can maintain a constant height above or distance with respect to the water bottom.

The invention especially relates to a trawl door that has limited contact only with the water bottom.

The invention also aims at providing a sturdy construction which provides a slight chance of damage to the trawl door.

The invention also aims at providing a trawl door that gives less damage to the water bottom than known trawl doors.

So as to reach at least one of the above mentioned goals, the present invention provides according to a first embodiment a trawl door that comprises the features of claim 1. This trawl door has the advantage that in a simple and in a constructively sturdy way an adaptation of the positioning of the trawl door can be obtained when the feeler device, more in particular the sliding shoe, contacts the water bottom. Since the feeler device contacts the water bottom the trawl door will tilt. The adaptation of the position may both relate to the height with respect to the water bottom and the tilting angle of the trawl door with respect to the water bottom and with respect to the direction of displacement.

It is especially preferred that the trawl door as a starting position has a slight tilting with respect to the bottom, such that when pulling the trawl door through the water the bottom edge is positioned slightly in front of the top edge. As a consequence, the trawl door will automatically move downward when in use in such position. The term "downward" is also called "towards the water bottom". When the feeler device contacts the water bottom, the trawl will tilt due to the reactive force and move away from the water bottom. The operation is, in particular, as follows: in a starting position of the trawl door as mentioned above, the trawl door is able to tilt slightly in a forward direction when the feeler device contacts the water bottom such that the top edge is at a position in frot of the bottom edge and the trawl door, due to the forward movement, will move upwards. When the feeler device does not contact the water bottom anymore, the trawl door will resume its original position and move towards the bottomagain. As a consequence, the trawl door wil constantly be at a position slightly above the water bottom whereas the sliding shoe only, intermittently, contacts the water bottom.

It is preferred that at least one of the feeler device and the sliding shoe extends parallelly with the displacement direction of the trawl door, such that an accurate reaction movement of the trawl can be obtained by when the feeler device contacts the water bottom. This especially is the case where the sliding shoe is in line with the direction of movement and wherein said line of direction of movement hits the center of gravity of the trawl door. The phrase "center of gravity" is the position in the trawl door where forces at a left side and a right side thereof (seen in the direction of movement) when using the trawl door, cancel out each other.

It is preferred that the feeler device, with respect to the direction of movement, extends from a connection position at the trawl door backwards. Such provides a physically strong construction. It is especially preferred that the feeler device, with respect to the direction of movement, extends from the trawl door towards a position behind the trawl door. Such yields a physically still stronger construction.

It has shown that the trawl door according to the invention may damage the water bottom to a substantially lesser extent the the trawl doors according to the state of the art. For, the trawl door according to the invention can easily be constructed such that only the sliding shoe at least intermittently contacts the bottom and wherein the trawl door is kept at a substantially distance from the water bottom due to the movement of the trawl door through the water and the aerodynamic forces obtained. The trawl door itself will not contact the water bottom, only the sliding shoe will intermitently. Since the sliding shoe is much smaller than the trawl door the water bottom will substantially not be damaged.

As a result, also, the resistance of the trawl according to the invention is smaller than that of the known trawl doors.

Special reference is given to a trawl door that has a concave surface at a front side and a convex surface at a backside, wherein at the convex side a forerunner device is provided for connecting a forerunner of the trawlnet and at the concave side at least one pull device for connecting a pull cord is provided. Such shape of the surfaces of the trawl door provides a small resistance and an improved aerodynamic behavior which yields a more stable behaviour of the trawl door in the water when in use.

A further improved stability and controllability are obtained with a trawl door comprising an embodiment with, when in use, a bottom side at the side of the water bottom and an opposing upper side or top side, wherein over at least a portion of a side edge extending between the bottom side and top side of the trawl door a controllable flap is provided for adjusting the surface shape of the surface of the trawl door, preferably of the concavity and convexity of the surface of the trawl door.

Preferably, the feeler device and the sliding shoe are displaceable, for example tiltable, with respect to the trawl door and are operatively connected to the flap, such that in a first position of the feeler and the sliding shoe relatively away from the trawl door, the flap has a relatively small concavity and in a second position, relatively close to the trawl door, the flap has a relatively large concavity. Since, according to a preferred embodiment, the sliding shoe may be connected to a displacable lever, less damage to the water bottom will be induced, since the feeler device can move along with the water bottom, and wherein the control of the trawl door is substantially more accurate because of the displacable flap.

According to another embodiment the trawl door may comprise a first door member with a feeler comprising a sliding shoe for guiding the trawl door along the water bottom and furthermore may comprise a second door member, wherein said second door member is connected to the first door member at a position way from the sliding shoe and wherein at least one of said door members comprises a controllable flap for adapting the concavity and convexity of the surface of at least one of said door members. This modular buid up eases the ability of the trawl doors to be constructed as desired. By manufacturing the trawl door from two door members, the construction of the trawl door can be adapted to the circumstances at the water bottom, for example by changing the size of one or both said door members. By shortening the first door member (that is, less high, in the direction from the bottom side towards the top side of the trawl door) the second door member will be positioned at a smaller distance from the water bottom.

It is especially preferred that the second door member is connected to the first door member at the side away from the sliding shoe at an angle. Such provides an enhanced controllability of the trawl door. The first door member and the second door member are thus not mutually aligned, i.e. not situated in line with each other. Thereby, a simple and accurate adjustment of the operation of the trawl door can be obtained, in that a tilting of the trawl door will induce a change of the forces supplied by the water flow on the trawl door and as a consequence of which the displacement direction of the trawl door will change. By changing the concavity and convexity, respectively, of the surfaces, by contacting the water bottom with the sliding shoe, the trawl door will tilt with respect to the water bottom. A skilled person thus will be easily able to construct the trawl door such that a desired displacement direction of the trawl door is obtained.

In this respect it is remarked that, even when the trawl door does not comprise first and second door members that are positioned at an angle with respect to each other, a tilting of the trawl door with respect to the water bottom can be obtained, for example when the controllable flap is provided only near a top part or near a bottom part of the trawl door.

Due to the construction according to the invention the trawl door will, in a starting position where the sliding shoe is relatively positioned away from the door member, move towards the water bottom whereas the trawl door, in a position wherein the sliding shoe is relatively closer to the trawl door, move away from the water bottom. When the sliding shoe contacts the bottom and thus the feeler device will be displaced towards the trawl door, the trawl door will move away from the water bottom. The degree of moving away from the water bottom, may be controlled by setting the mutual angle of the first and second door members and the degree in which the flap is displaced.

More in articular, the trawl door according to the invention may be embodied for displacing the trawl door in a position relatively far tilted into a forward direction when the feeler device is displaced, that is when the sliding shoe is displaced towards the door member. The displacement of the trawl door will then be away from the water bottom. The pull cord will pull the door away from the water bottom. When moving the feeler device away from the trawl door, the trawl door will tilt backwards and move towards the water bottom.

According to an alternative embodiment of the trawl door according to the invention the convex/concave shape, in combination with the pull cord and the sliding shoe, will ensure that the trawl door can tilt and move towards the water bottom or away from the water bottom.

According to a preferred embodiment both surfaces of the flap may be embodied substantially as a single surface with the concave surface and the covex surface, such that a construction is obtained that provides an excellent guiding of the water flow and which is highly resistant against damage.

A stable and strudy construction is obtained when the pull device is provided at a position at the transition between the first and the second door member. It is especially preferred for the same reason that the forerunner device is provided at a position near the transition between the first and the second dor member.

When the trawl door comprises two door members the flap zowel can be provided at either one of the first or second door member, wherein the choice can be based on the required way of reaction of the trawl door when changing the position of the flap. In the trawl door, the flap therefore may be positioned pivotable with respect to the trawl door, more in particular with respect to at least one of the first door member and the second door member.

According to an alternative embodiment a first flap may be positioned pivotable with respect to the first door member and a second flap may be positioned pivotable with respect to the second door member.

The trawl door according to the invention has a front side that is directed in the displacement direction (or the direction of movement) and an opposite back side, that is directed opposed to the displacement direction. Here, it is preferred that the controllable flap is positioned at the back side, yielding a very stable behavior and also a constructively very strong trawl door.

A further preference relates to a trawl door, expecially but not limited to a trawl door comprising two door members and wherein a flap is provided at the second door member that is positioned at an angle with respect to the first door member, wherein the sliding shoe is connected pivotably to the trawl door by means of a lever and is connected operatively with the flap, such that in a first position of the sliding shoe relatively away from the trawl door the flap provides a relatively small concavity and in a second position, relatively closer to the trawl door gelegen, the flap provides a relatively larger concavity. By such construction of the trawl door, the trawl door wil move away from the water bottom when the sliding shoe contacts the bottom and the feeler device wil thus be displaced towards the trawl door. The degree of moving away can be controlled by means of setting the mutual angle of the first and second door member and the degree in which the flap is displaced.

The flap is constructively connected with the feeler device. It may be a rigid control device, for example a rod construction or a flexible control device, like a cable connection. In order, in particular in the case of a flexible connection, to prevent that the connection device becomes hanging loosely, such as can happen with a cable, it is preferred that at least one of the feeler device and the flap is preloaded (or pretensioned) by means of a spring member in a starting position. For example, this may a position of the feeler device away from the trawl door. Similarly, the flap may be preloaded in an opposite direction. When touching the water bottom with the sliding shoe the position of the flap will be determined by the positioning of the feeler device.

Substantially, it can be ensured with the present invention that a small displacement of the feeler device with respect to the trawl door as a result of an increase or decrease of the water bottom has a substantially immediate change in the position of the flap with the result that trawl door immediately follows the modified contour of the water bottom. Thus, only the sliding shoe will contact the water bottom, yielding a minor impact on the water bottom and a low resistance. Such behavior can easily and certainly be obtained with the trawl door according to the invention.

Therefore it is preferred that the feeler device and the sliding shoe are pivotable with respect to the trawl door by means of a pivot and are operatively connected with the flap and wherein the feeler device at a position away from the pivot with the trawl door is connected to a control device, preferably a cable or a rod structure, for operating the flap.

The sliding shoe may have a body extending in a longitudeal direction. So as to have an as low as possible impact on the water bottom it is preferred that the longitudinal direction of the sliding shoe is parallel with the displacement direction.

Analogously, it is preferred that the feeler device is parallel with respect to the direction of movement, since then when contacting the water bottom and pivoting of the feeler device with respect to het trawl door a very small sliding movement on the water bottom is obtained.

The trawl door according to the invention preferably has the shape of a wing, wherein the trawl door at the front side comprises a rounded edge at the front side and a relatively sharp edge at the back side. Dit verschaft een optimaal gedrag van het trawl door in het water.

The trawl door according to the invention furthermore preferably comprises an elevator for controlling the positioning of the trawl door with respect to the water bottom, said elevator being operatively connected to the feeler device (also mentioned a feeler or lever), such that in a first position of the feeler device and the sliding shoe relatively away from the trawl door, the elevator forces the trawl door relatively towards the water bottom and in a second position of the feeler device, relatively close to the trawl door, the elevator forces the trawl door relatively away from the bottom; wherein the elevator is preferably shaped as a wing with a concave surface directed towards the water bottom and an opposed convex surface.

According to a further aspect the invention relates to the use of a set of trawl doors according to the invention, wherein both trawl doors on the one hand are connected to a ship by means of a pull cord and on the other hand are connected to a trawl net by means of a forerunner, wherein, with reference to the displacement direction, a first trawl door is positioned at a left side and a second trawl door is positioned at a right side, such that a feeler device extending from each trawl door and comprising a sliding shoe is guided along the water bottom with a sliding side of said sliding shoe for guiding the trawl door above the water bottom.

One embodiment thereof is comprised of the use of a set of trawl doors according to the invention, wherein both said trawl doors on the one hand are connected to a ship by means of a pull cord and on the other hand are connected to a trawl net by means of a forerunner, wherein, with respect to the displacement direction, a first trawl door is positioned at a left side and a second trawl door is positioned at a right side, such that concave surfaces of both trawl doors are at least partially directed towards each other.

Similarly, the invention relates to the use of a set of trawl doors according to the invention as mentioned above, in particular a trawl door with two door members that are mutually tilted, wherein both said trawl doors on the one hand are connected to a ship by means of a pull cord and on the other hand are connected to a trawl net by means of a forerunner, wherein, with respect to the displacement direction, a first trawl door is positioned at a left side and a second trawl door is positioned at a right side, such that the second door member of each trawl door is tilted away from the other trawl door.

It is especially preferred to apply at least one of the following features in the trawl door according to the invention:
An embodiment of the trawl door according to the invention wherein the trawl door comprises a first door member with a feeler device that comprises a sliding shoe for guiding the trawl door along and above the water bottom and that furthermore comprises a second door member, wherein said second dor member is connected to the first door member at a position away from the sliding shoe and wherein at least one of said door members has a controllable flap for adapting the concavity and convexity of the surface of at least one of said door members.

An embodiment of the trawl door according to claim 8, wherein the second door member is connected at an angle to the first door member at the side away from the sliding shoe.

An embodiment of the trawl door according to claims 8 or 9, wherein the pull device is provided at a position near the transition between the first and second door member.

An embodiment of the trawl door according to any of claims 8 - 10, wherein the forerunner device is provided at a position near the transition between the first and second door member.

An embodiment of the trawl door according to claim 6 - 11, wherei the flap is positioned pivotable with respect to het trawl door, preferably with respect to at least on of the first and second door members.

An embodiment of the trawl door according to claims 8 - 11, wherein a first flap is positioned pivotably with respect to the first door member and a second flap that is positioned pivotably with respect to the second door member.

Hereinafter, the invention will be described by means of a drawing. The drawing shows in:
Fig. 1 a schematic perspective view of a trawl door according to the invention,
Fig. 2 a detailed view of the trawl door according to Fig. 1,
Fig. 3 a cut out of parts of a trawl door according to the invention,
Fig. 4 a side view of a trawl door according to Fig. 3, and
Fig. 5 a sectional view of the trawl door according to Fig. 4.

In the figures the same and identical parts are identified by the same reference numerals. However, for ease of understanding the invention not all parts that are required for a practical embodiment are shown in the drawing.

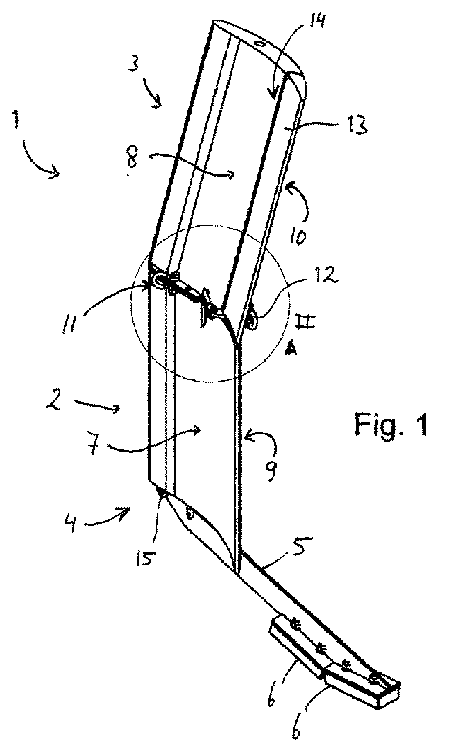

Fig. 1 shows a schematic perspective view of a trawl door 1 according to the invention. The trawl door 1 comprises two door members 2, 3, that are mutually tilted in this embodiment.

The first door member 2 comprises at a slide side 4 a lever 5 to which s sliding shoe 6 is connected. In this embodiment, the sliding shoe 6 is embodied as two separate elements, but it may comprise a single element or even more than two elements.

The first and second door members 2, 3 are both curved, such that a concave surface 7, 8 and a convex surface 9, 10 are obtained. The surfaces 7, 9 at the first door member 2 are positioned at opposite sides of of door member 2. This applies similarly for the surfaces of second door member 3.

The trawl door 1 comprises a pull device 11 to which a cord can be connected for moving the trawl door 1 through the water. The trawl door 1 is embodied for keeping a trawlnet (not shown) open when pulling same through the water, and as a consequence the trawl door 1 also comprises a forerunner device 12 for connecting thereto a so-called forerunner or bottom line that is connected to the trawlnet.

So as to be able to control the position of the trawl door 1 in the water, and thus the displacement direction of the trawl door 1 in the water, a controllable flap 13 at a second dor member 3 is provided. The flap 13 can also be connected at the first door member 2, or both door members 2, 3 may each comprise their own controllable flap, but this is not shown in the drawing.

The trawl door according to the invention may also comprise an elevator for controlling the height of the trawl door with respect to de water bottom. Such elevator may comprise a wing with a convex nd/or concave surface, substantially similar to the convex/concave surface of the trawl door. The wing will be positioned substantially horizontally when in use, and thus the wing will not induce a displacement of the trawl door in a sideways direction but only a displacement away from the water bottom or towards the water bottom.

The flap 13 is, in accordance with the embodiment of Fig. 1, connected pivotably with the second door member 3 near a junction line 14. By displacing the flap 13 towards the convexe zijde 10 a less convex or a less concave surface of second door member 3 is obtained. However, when displacing the flap 13 towards the concave side 10 a more pronounced convex or more pronounced concave surface of second door member 3 is obtained. As a consequence, the direction, the trawl door 1 will assume in the water, will be changed.

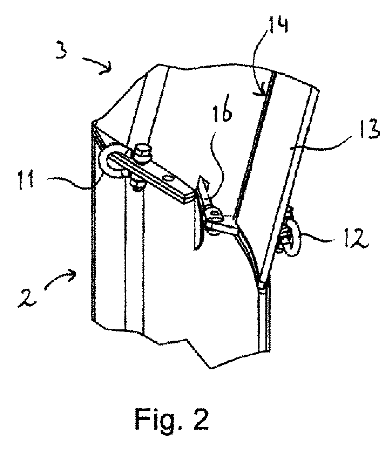

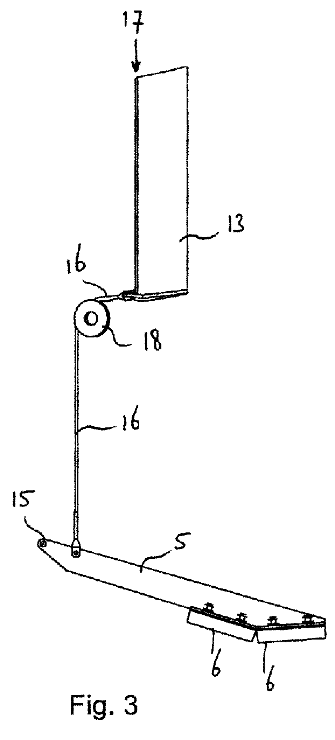

The trawl door 1 comprises a pivotable feeler device 5 (also referred to as lever 5) that is swivable around a pivot axis 15. The lever 5 is also operatively coupled to flap 13 for controlling same, by means of a control member 16; in the present embodiment tis is a cable 16 but this may also comprise a rod construction. This construction is shown in more detail in Fig. 2 and Fig. 3. Fig. 2 shows a detail II from Fig. 1. The cable 16 is guided along a roll 18 such that a movement of lever 5 is transferred onto flap 13.

The cable 16 is coupled to lever 5. When moving the lever 5 downward, that is in a direction that is away from the flap 13, for example because the trawl door 1 is positioned at a certain distance from the water bottom such that the sliding shoe 6 does not contact the water bottom, the cable 16 will be tensioned. The flap 13 thus will pivot around the pivot axis 17 which is positioned near the junction line 14, yielding a more concave surface 8 and convex surface 9.

In an opposite way, when the lever 5 moves upward the flap 13 will be directed the other way yielding a less concave surface 8 and convex surface 9.

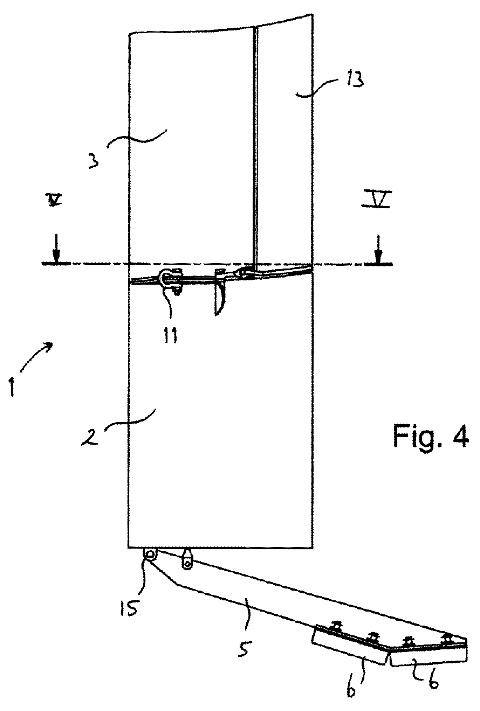

Fig. 4 shows a side view of the trawl door 1 according to the invention. Fig. 4 shows a side view of the construction according to Fig. 3, wherein the first and second door members 2, 3 both are shown completely.

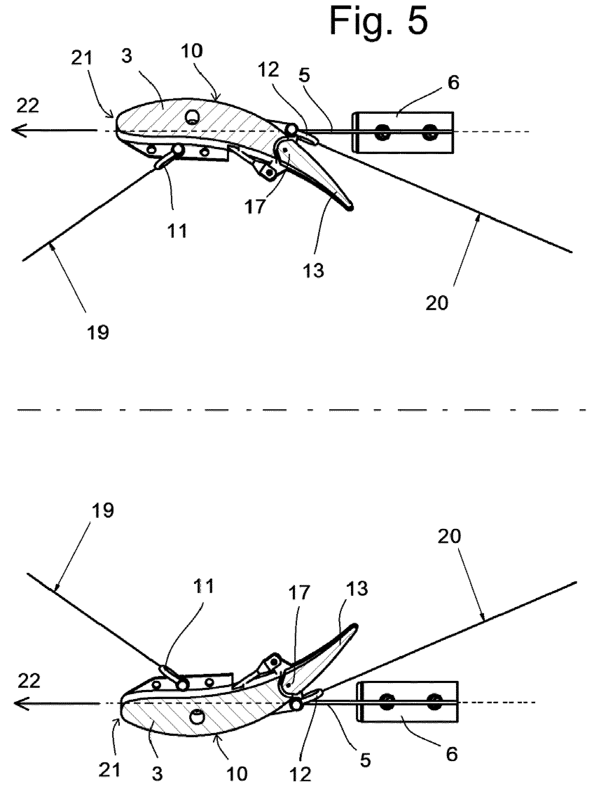

In Fig. 5 a sectional view according to the line V-V in Fig. 4 is shown. The trawl door 1 comprises two door members 2, 3, wherein the upper door member 3 with respect to the fishing line and the forerunner line is directed outwardly. The upper door members 3 of two trawl doors 1 that are used for pulling a trawl net are thus directed away from each other. The direction of movement 22 of trawl door 1 is depicted in this Figure. The longitudinal direction of the lever 5 and of the sliding shoe 6 is, in the embodiment of this Figure, identical to, or parallel with, the direction of movement 22. The pull cord or fishing line 19 and the forerunner or bottom line 20 are also shown in Fig. 5. By making the surface 10 more convex, by pulling on flap 13, the front side 21 of trawl door 1 will turn away from the fishing line 19. The lower door member 2 relatively moves towards the fishing line 19, the upper door member 3 moves away from the fishing line 19. The top side of the trawl door 1 therefore tilts outwardly and as a consequence the trawl door 1 will generate a spreading action on the fishing net as well as a downward directed force, that is, into the direction of the water bottom.

The trawl door 1 is coupled to a ship (a trawler, not shown) by means of pulling cords 19 and pulls a trawlnet (not shown) through the water by means of forerunners 20. To that end, in practice two of such trawl doors 1 are provided, as schematically shown in Fig. 5.

The invention is not limited to the embodiments as described above and as shown in the drwing. The invention is limited only by the appended claims.

The invention also relates to all combinations of features described above independently from each other.

## Claims

1. A trawl door for use with trawl fishing for keeping open above a water bottom a trawl net, wherein said trawl door is embodied for displacement above the water bottom in a displacement direction, wherein the trawl door has a first surface at a, with respect to the displacement direction, front side and a second surface at a, with respect to the displacement direction, back side, and wherein the trawl door at a front side has a pull device for coupling a pull cord of the trawl net and at a back side has at least one forerunner device for coupling thereto a forerunner, **characterized in that** the trawl door has a feeler device that extends away from the trawl door for guiding same along the water bottom, said feeler device comprising a sliding shoe with a sliding side for contact with the water bottom for guiding the trawl door above the water bottom.

2. A trawl door according to claim 1, wherein at least one of the feeler device and the sliding shoe extends parallelly with the displacement direction of the trawl door.

3. A trawl door according to claim 1 or 2, wherein the feeler device, with respect to the displacement direction, extends backward from a connection position at the trawl door.

4. A trawl door according to claim 1, 2 or 3, wherein the feeler device, with respect to the displacement direction, extends from the trawl door towards a position behind the trawl door.

5. A trawl door according to claim 1, wherein the trawl door has a concave surface at a front side and a convex surface at the back side, wherein at the convex side a forerunner device is provided for connecting a forerunner of the trawl net and at the concave side at least a pull device is provided for connecting a pull cord.

6. A trawl door according to claim 1, comprising, when in use, a bottom side at the side of the water bottom and an opposing upper side or top side, wherein over at least a portion of a side edge extending between the bottom side and top side of the trawl door a controllable flap is provided for adjusting the surface shape of the surface of the trawl door, preferably of the concavity and convexity of the surface of the trawl door.

7. A trawl door according to claim 6, wherein the feeler device and the sliding shoe are displaceable with respect to the trawl door and are operatively connected to the flap, such that in a first position of the feeler and the sliding shoe relatively away from the trawl door, the flap has a relatively small concavity and in a second position, relatively close to the trawl door, the flap has a relatively large concavity.

8. A trawl door according to claim 6, wherein the trawl door has a front side at a side directed towards the direction of movement and a back side directed in an opposed direction, and wherein the controllable flap is positioned at the back side.

9. A trawl door according to claim 7, wherein the feeler device is pre-tensioned by means of a spring member in the first position that is in a direction away from the trawl door.

10. A trawl door according to claim 7, wherein the feeler device and the sliding shoe are pivotable with respect to the trawl door by means of a pivot and are operatively connected with the flap and wherein the feeler device at a position away from the pivot with the trawl door is connected to a control device, preferably a cable or a rod structure, for operating the flap.

11. A trawl door according to any of the preceding claims, wherein the trawl door at the front side comprises a rounded edge at the front side and a relatively sharp edge at the back side.

12. A trawl according to any of the preceding claims, comprising a an elevator for controlling the positioning of the trawl door with respect to the water bottom, said elevator being operatively connected to the feeler device, such that in a first position of the feeler device and the sliding shoe relatively away from the trawl door, the elevator forces the trawl door relatively towards the water bottom and in a second position of the feeler device, relatively close to the trawl door, the elevator forces the trawl door relatively away from the bottom; wherein the elevator is preferably shaped as a wing with a concave surface directed towards the water bottom and an opposed convex surface.

13. A use of a set of trawl doors according to any of claims 1 to 12, wherein both trawl doors on the one hand are connected to a ship by means of a pull cord and on the other hand are connected to a trawl net by means of a forerunner, wherein, with reference to the displacement direction, a first trawl door is positioned at a left side and a second trawl door is positioned at a right side, such that a feeler device extending from each trawl door and comprising a sliding shoe is guided along the water bottom with a sliding side of said sliding shoe for guiding the trawl door above the water bottom.

14. A use according to claim 13 of a set of trawl doors according to any of claims 6 to 12, wherein both said trawl doors on the one hand are connected to a ship by means of a pull cord and on the other hand are connected to a trawl net by means of a forerunner, wherein, with respect to the displacement direction, a first trawl door is positioned at a left side and a second trawl door is positioned at a right side, such that concave surfaces of both trawl doors are at least partially directed towards each other.

15. A use according to claim 13 or 14 of a set of trawl doors according to any of claims 8 to 12, wherein both said trawl doors on the one hand are connected to a ship by means of a pull cord and on the other hand are connected to a trawl net by means of a forerunner, wherein, with respect to the displacement direction, a first trawl door is positioned at a left side and a second trawl door is positioned at a right side, such that the second door member of each trawl door is tilted away from the other trawl door.
